# NEUE EUROPÄISCHE PATENTSCHRIFT

(11) **EP 3 363 959 B2**
(45) Veröffentlichungstag und Bekanntmachung des Hinweises auf die Entscheidung über den Einspruch: **22.01.2025**
(45) Hinweis auf die Patenterteilung: 24.07.2019
(21) Anmeldenummer: 17156613.6
(22) Anmeldetag: 17.02.2017
(51) Int. Cl.: E04B 1/94, E04C 2/24

(54) **BRANDSCHUTZBESCHICHTUNG**
FIRE RESISTANT COATING
REVÊTEMENT IGNIFUGE

(43) Veröffentlichungstag der Anmeldung: 22.08.2018
(73) Patentinhaber: Owens Corning Intellectual Capital, LLC, Toledo, OH 43659 (US)
(72) Erfinder: Schillings, Hans, 41751 Viersen (DE); Schillings, Eric, 41751 Viersen (DE)
(74) Vertreter: CBDL Patentanwälte

(56) Entgegenhaltungen:
- EP-A1- 2 942 193
- WO-A1-2005/003254
- US-A1- 2017 022 704

## Beschreibung

Die vorliegende Anmeldung betrifft eine mehrschichtige Wärmeisolierplatte zur Wärmedämmung für Gebäude, eine Rückenschicht für eine Wärmeisolierplatte sowie ein Verfahren zu Herstellung einer Rückenschicht als auch die Verwendung einer mehrschichtigen Wärmeisolierplatte zur Wärmedämmung für Gebäude, insbesondere zur Wärmedämmung für hinterlüftete Fassaden.

Mehrschichtige Wärmeisolierplatten werden im Gebäudebau weithin angewendet, um zum Beispiel die Wärmeisolierung von Wänden, Böden und Dächern sicherzustellen. Solche Isolierplatten für Konstruktion des bekannten Typs weisen allgemein eine Isolierschicht auf, die zum Beispiel aus Polyurethan-Schaum hergestellt ist, geschichtet zwischen zwei jeweiligen Rückenschichten, die zum Verkleiden dieser Isolierschicht geeignet sind. Solche Rückenschichten erfüllen eine doppelte Rolle: Einerseits nehmen Sie die Expansion des PolyurethanSchaums auf, und andererseits geben sie diesen Platten eine vordefinierte Form und Dicke, wobei sie gleichzeitig die Dimensionsstabilität sicherstellen.

Es gibt unterschiedliche Ansätze und Materialien, um Wärmeisolierplatten herzustellen. Im Stand der Technik bekannte Materialien, die für Rückenschichten von Isolierpolyurethanplatten eingesetzt werden, sind beispielsweise mineralisierte Glasfasern oder aber auch metallische Schichten aus beispielsweise Aluminium.

Die Verwendung der unterschiedlichsten Rückenschichtmaterialien hat in Abhängigkeit von deren Dicken und Zusammensetzung auch einen Einfluss auf die Flexibilität. Dies ist insofern von Bedeutung, da die Rückenschichten gebogen und/oder aufgerollt werden können sollten.

Wärmeisolierplatten für Gebäude, die mit Rückenschichten ausgestattet sind, werden regelmäßig in Euroklassen klassifiziert.

Diese Baustoff-Euroklassen werden unterschieden mit Buchstaben, wie beispielsweise A1, A2, B, C, D, E und F. Weitere Unterteilungen definieren Brandnebenerscheinungen wie Rauchentwicklung (s = smoke, Klassen s1, s2 und s3) oder brennendes Abtropfen, Abfallen (d = droplets, Klasen d0, d1 und d2) von Baustoffen.

Die Klasse E gibt dabei die Mindestanforderung an deutsche/europäische Baustoffe an. Klasse B gibt einen hohen Grad an Feuerbeständigkeit an. Klasse F bedeutet, dass der Baustoff leicht entflammbar ist und stellt daher die schlechteste Klassifizierung dar.

Zum Beispiel fallen Isolierplatten in Polyurethan mit Rückenschichten vom metallischen Typ (wie etwa Aluminium) mit einer Dicke von mehr als 80 µm in die Feuerbeständigkeitsklasse B.

Ein bekannter Test, der zum Evaluieren der Euroklassen einer Polyurethan-Platte verwendet wird, ist die UNI EN 11925-Methode (Kleinbrenner). Die Dauer dieses Tests variiert in Abhängigkeit von der Klassifikation des Materials: 15 Sekunden für Klasse E, 30 für die höheren Klassen. Um den Test zu durchlaufen, muss die Höhe einer an der Testprobe erzeugten Flamme unterhalb eines Schwellenwerts von 150 mm bleiben.

Zum Beispiel sind die Platten, die eine geringere Leistungsfähigkeit (Klasse F) haben, jene, die Papier(Teerpapier, Filzpapier, etc.)-Rückenschichten verwenden. Diese Platten sind daher für Baustoff-Anwendungen ungeeignet, da immer das Risiko eines direkten Kontakts mit den Flammen in den Anfangsstufen des Brandes besteht (Isolierung von Böden unter Glättbohlen oder Begrenzungszwischenräumen).

Allgemein müssen, um für eine Polyurethan-Isolierplatte gemäß der Norm EN 13501-11925/2 die Feuerbeständigkeit A1, A2, B C oder D zu klassifizieren, Rückenschichten der Isolierschichten des metallischen Typs angewendet werden (wie etwa Aluminiumschichten mit einer Dicke von mehr als 80 µm) [für die Prüfung nach DIN EN 13501-1 Klasse A1, A2, B, C, D wird zunächst nach DIN EN 11925-2 (Kleinbrennertest) geprüft, danach wird, je nach zu bestimmender Klasse, ein SBI Test nach DIN EN 13823 durchgeführt].

DE 20 2012 013 058 U1 betrifft eine Rückenschicht einer mehrschichtigen Bau-Wärmeisolierplatte, die eine Verstärkungsschicht aus Fasermaterial, eine Verkleidungsschicht der Verstärkungsschicht, hergestellt durch Verteilen eines flüssigen Mineralgemischs auf der Verstärkungsschicht; eine feuerbeständige Schicht, die expansives Graphit aufweist, das auf der Verkleidungsschicht angeordnet ist, aufweist.

US 6,855,393 B1 offenbart eine Rückenschicht einer mehrschichtigen Bau-Wärmeisolierplatte. Weiterhin offenbart US 6,855,393 B1 eine Hauptschicht aus thermisch isolierendem Material, nämlich einer Aluminiumfolie, die eine erste Oberfläche und eine entgegengesetzt angeordnete zweite Oberfläche aufweist; eine erste Rückenschicht auf der Hauptschicht, die mit der Hauptschicht entlang der ersten Oberfläche verbunden ist, eine zweite Rückenschicht der Hauptschicht, die mit der Hauptschicht entlang der zweiten Oberfläche verbunden ist; wobei zumindest eine der ersten und zweiten Rückenschichten eine Verstärkungsschicht aus Fasermaterial aufweist, eine Verkleidungsschicht, die auf der Verstärkungsschicht hergestellt ist und eine feuerbeständige Schicht, die auf der Verkleidungsschicht angeordnet ist und expansives Graphit aufweist. Die feuerbeständige, das heißt intumeszierende Schicht ist auf der Verkleidungsschicht angeordnet.

GB 2 290 989 offenbart die Verwendung einer Lösung mit Silikaten, die aufgetragen eine Silikatbeschichtung an der Oberfläche des Produkts ergeben sollen, um eine Feuerbeständigkeit eines ansonsten entflammbaren Produktes zu gewährleisten.

US 2017/0022704 A1 beschreibt eine Wärmeisolierplatte, die eine Brandschutzschicht mit Blähgraphit aufweist, und eine Rückenschicht für eine Wärmeisolierplatte mit den Merkmalen des Oberbegriffs des Anspruchs 1.

Die Wärmeisolierplatten der vorliegenden Erfindung weisen hervorragenden Flammschutz auf, insbesondere können sie daher zum Einsatz kommen, wenn die Brandschutzbestimmungen eine schwer entflammbare Dämmstofflage erfordern oder eine schwer entflammbare Decklage ein Produkt vor Brandweiterleitung schützen soll. Außerdem stellen die Wärmeisolierplatten der Erfindung eine günstige und leichtere Alternative zu Wärmeisolierplatten mit metallischen Decklagen aus Aluminium oder Stahl mit hoher Materialdicke bzw. aus Metallen bestehende Rückenschichten dar.

Die Wärmeisolierplatten der Erfindung können beispielsweise Polyurethan-Wärmedämmplatten sein, die mit den erfindungsgemäßen Rückenschichten ausgerüstet sind und dabei die Baustoffklasse B1 nach DIN 4102-1 erreichen oder nach DIN EN 13501-1 in Klasse B oder C fallen können.

Der vorliegenden Erfindung liegt die Aufgabe zugrunde, die im Stand der Technik genannten Probleme zu lösen. Insbesondere ist die mehrschichtige Wärmeisolierungsplatte zur Wärmedämmung gemäß der vorliegenden Erfindung für hinterlüftete Fassaden speziell vorteilhaft und geeignet. Hinterlüftete Fassaden sind insofern problematisch als diese im Brandfall zu einem Kamineffekt führen und hier ein besonders effektiver Brandschutz erforderlich ist. Gegenüber dem Stand der Technik, beispielsweise der DE 20 2012 013 058 U1 weisen die erfindungsgemäßen Gegenstände den Vorteil auf, dass die mineralische Beschichtung gegenüber der Brandschutzbeschichtung auf der anderen Seite des Glasfaservlieses vorliegt. Dadurch wird die zum Schaum zeigende Seite von der Brandschutzlage getrennt entkoppelt. Diese Anordnung verbessert noch den Brandschutz, da die geringere weitergeleitete Temperatur dazu führt, dass der PU-Schaum nicht innerhalb eines bestimmten Zeitraums expandiert wodurch ein Reißen der Decklage verhindert wird.

Ein weiterer Vorteil dieser erfindungsgemäßen Anordnung ist die PU-freundliche mineralische Beschichtung, die negative Reaktionen auf dem aufschäumenden PU-Gemisch verhindert und eine gleichmäßige geschlossene Oberfläche des Dämmschaums bewirkt.

Überraschend wurde gefunden, dass die zuvor im Stand der Technik genannten Probleme durch die Gegenstände der vorliegenden Erfindung gelöst werden können.

Die Gegenstände der vorliegenden Erfindung werden in den Ansprüchen 1-15 definiert.

Ein Gegenstand der vorliegenden Erfindung ist eine mehrschichtige Wärmeisolierplatte zur Wärmedämmung für Gebäude umfassend:
a) eine Hauptschicht aus thermisch isolierendem organisch-polymerem Material, die eine erste Hauptfläche und eine der ersten Hauptfläche abgewandte zweite Hauptfläche aufweist;
b) eine Verstärkungsschicht mit einer ersten Hauptfläche und eine der ersten Hauptfläche abgewandte zweite Hauptfläche, wobei die Verstärkungsschicht mit der Hauptschicht entlang der ersten Hauptfläche der Hauptschicht und entlang der ersten Hauptfläche der Verstärkungsschicht verbunden ist, und wobei die Verstärkungsschicht anorganische Salze in einer Menge von wenigstens 50 Gew.-%, bezogen auf das Gesamtgewicht der Verstärkungsschicht, aufweist;
c) eine Entkopplungsschicht mit einer ersten Hauptfläche und eine der ersten Hauptfläche abgewandte zweite Hauptfläche, wobei die Entkopplungsschicht mit der ersten Hauptfläche der Entkopplungsschicht auf der zweiten Hauptfläche der Verstärkungsschicht angeordnet und mit dieser verbunden ist, wobei die Entkopplungsschicht ein oder mehrere Fasern und/oder Vliese umfasst, die ausgewählt sind aus der Gruppe bestehend aus Glasfaservlies, Polyestervlies, Glasgewebevlies, Glasgelegevlies und Glasfaser-/Polyestergemisch-Vlies; und
d) eine Brandschutzschicht, die auf der zweiten Hauptfläche der Entkopplungsschicht (30) angeordnet und mit dieser verbunden ist, wobei die Brandschutzschicht expansives Graphit (A) mit einer mittleren Teilchengröße D50 < 150 µm und ein expansives Graphit (B) mit einer mittleren Teilchengröße D50 von 180 bis 500 µm aufweist.

Hauptflächen sind die Flächen der Schichten, die flächenmäßig am größten sind. Beispielsweise bilden bei einem Schreibpapierblatt die Vorder- und Rückseite der Schreibflächen des Blatts die Hauptflächen und die Papierrandflächen bildet die Nebenfläche.

Die erfindungsgemäße mehrschichtige Wärmeisolierschicht umfasst zumindest die zuvor genannten Schichten, also die Hauptschicht a), die Verstärkungsschicht b), die Entkopplungsschicht c) sowie die Brandschutzschicht d), wobei die Verstärkungsschicht, die Entkopplungsschicht und die Brandschutzschicht zusammen eine erfindungsgemäße Rückenschicht ausbilden, die auf einer Hauptschicht a) aufgebracht werden kann zur Ausbildung einer erfindungsgemäßen Wärmeisolierschicht.

### Hauptschicht

Die Hauptschicht a) der mehrschichtigen Wärmeisolierplatte dient im Wesentlichen der Wärmedämmung und besteht oder umfasst thermisch isolierendes organisch-polymeres Material. In einer bevorzugten Ausgestaltung umfasst die Wärmeisolierplatte eine Hauptschicht, die im Wesentlichen ein oder mehrere organische Polymer(e) aufweist. In einer Ausgestaltung umfasst die Hauptschicht a) mindestens 50 Gew.-%, vorzugsweise mindestens 70 Gew.-%, weiter bevorzugt mindestens 80 Gew.-%, insbesondere mindestens 90 Gew.-%, speziell mindestens 95 Gew.-%, weiter speziell mindestens 98 Gew.-%, beispielsweise mindestens 99 Gew.-% oder 99,5 bis etwa 100 Gew.-% organisches Polymer, wobei die Gewichtsangaben jeweils bezogen sind auf das Gesamtgewicht der Hauptschicht a).

In einer bevorzugten Ausgestaltung ist die Hauptschicht a), welche ein thermisch isolierendes organisch-polymeres Material umfasst oder daraus besteht ausgewählt aus der Gruppe bestehend aus Polyurethan, Polyisocyanurat, Polystyrol und Phenolharz sowie Mischungen hiervon.

Es hat sich gezeigt, dass insbesondere aufgeschäumte wärmeisolierende organische Polymerschichten im Zusammenspiel mit den weiteren Schichten der erfindungsgemäßen Gegenstände hervorragend geeignet sind. Dies gilt nicht nur im Hinblick auf die verbesserten Wärmedämmeigenschaften und die Leichtigkeit des Materials, sondern auch insbesondere bezüglich der Brandschutzeigenschaften.

In einer weiteren bevorzugten Ausgestaltung der Erfindung ist die Hauptschicht aufgeschäumt.

Besonders gute Ergebnisse lassen sich erzielen, wenn die Hauptschicht a) ein aufgeschäumtes Polyurethan und/oder Polyisocyanurat umfasst.

Die mehrschichtige Wärmeisolierplatte der vorliegenden Erfindung ist bevorzugt als flächige und im Wesentlichen starre Platte ausgestaltet. Dies erleichtert die Verbaubarkeit, insbesondere bei der Brandschutzisolierung von Fassaden, Decken und Wänden.

In einer bevorzugten Ausgestaltung ist die mehrschichtige Wärmeisolierplatte daher hinsichtlich der Hauptschicht als Wärmedämmplatte ausgestaltet. Diese Platten weisen üblicherweise eine Vorder- und eine Rückseite auf, die die Hauptflächen ausbilden sowie einen umlaufenden Rand. Der durchschnittliche Abstand der beiden Hauptflächen der Platte definiert die Dicke der Platte.

Die Hauptschicht a) ist insbesondere als Dämmplatte ausgestaltet, welche eine Dicke von 1 bis 20 cm, vorzugsweise 2 bis 15 cm, insbesondere 3 bis 10 cm aufweist.

Die erfindungsgemäß zum Einsatz kommenden Hauptschichten a) weisen bevorzugt eine Wärmeleitfähigkeit unterhalb von 0,035 W/mK und vorzugsweise zwischen 0,01 und 0,03 W/mK auf.

### Verstärkungsschicht

Die erfindungsgemäße mehrschichtige Wärmeisolierschicht der Erfindung weist eine Verstärkungsschicht b) auf. Die Verstärkungsschicht weist ebenfalls eine erste Hauptschicht und eine der ersten Hauptschicht abgewandte zweite Hauptschicht auf. Die erste Hauptschicht der Verstärkungsschicht b) ist direkt auf der ersten Hauptfläche der Hauptschicht angeordnet und steht mit dieser in direktem Kontakt. Die Verstärkungsschicht trägt zur Verstärkung der mehrschichtigen Wärmeisolierschicht bei und führt zudem zu einer erheblich verbesserten Verträglichkeit der Brandschutzbeschichtung mit dem organisch polymeren Material der Hauptschicht a).

Die Verstärkungsschicht weist hauptsächlich anorganische Salze auf, die negative Reaktionen mit der Hauptschicht, insbesondere bei einer aufgeschäumten Hauptschicht, wie beispielsweise aufgeschäumtes Polyurethan oder Polyisocyanurat, verhindert und eine gleichmäßige geschlossene Oberfläche des polymeren Schaums der Hauptschicht bewirkt.

Die Verstärkungsschicht b), die mit der ersten Hauptfläche der Hauptschicht verbunden ist, weist anorganische Salze in einer Menge von wenigstens 50 Gew.-%, bezogen auf das Gesamtgewicht der Verstärkungsschicht, auf.

In einer bevorzugten Ausgestaltung weist die Verstärkungsschicht anorganische Salze in einer Menge von 50 bis 98 Gew.-%, vorzugsweise 60 bis 95 Gew.-%, weiter bevorzugt 70 bis 94 Gew.-%, insbesondere 75 bis 90 Gew.-%, jeweils bezogen auf das Gesamtgewicht der Verstärkungsschicht, auf.

In einer bevorzugten Ausgestaltung umfasst die Verstärkungsschicht Erdalkalimetallsalze, insbesondere die Salze ausgewählt aus der Gruppe bestehend aus Magnesiumsalze, Calciumsalze, Bariumsalze sowie Mischungen hiervon. Erdalkalimetallsalze, insbesondere solche die Sauerstoffatome in ihren Anionen aufweisen, haben sich als besonders effektiv für die erfindungsgemäß einzusetzende Verstärkungsschicht herausgestellt. Speziell bevorzugt umfasst die Verstärkungsschicht Salze ausgewählt aus der Gruppe bestehend aus Sulfate, Hydrogensulfate, Carbonate, Hydrogencarbonate, Hydroxide und Oxide sowie Mischungen hiervon, umfasst. Beispielhaft umfasst die Verstärkungsschicht (20) ein oder mehrere anorganische Salze ausgewählt aus der Gruppe bestehend aus Calciumcarbonat und Bariumsulfat sowie Mischungen hiervon. Speziell bevorzugt wird für die Verstärkungsschicht Kalksteinmehl eingesetzt.

Im Rahmen der vorliegenden Erfindung kann die Verstärkungsschicht Metallhydroxide aufweisen. In einer bevorzugten Ausgestaltung liegen diese Metallhydroxide zusätzlich neben den zuvor genannten anorganischen Salzen vor. In einer speziellen Ausgestaltung weist die Verstärkungsschicht Aluminiumhydroxid auf. Es hat sich gezeigt, dass der Einsatz von Aluminiumhydroxid, insbesondere neben weiteren anorganischen Salzen wie beispielsweise Calciumcarbonat oder Bariumsulfat, zu einem verbesserten Brandschutz führt.

Die Verstärkungsschicht weist in einer Ausführungsform 1,5 bis 20 Gew.-%, vorzugsweise 2 bis 18 Gew.-%, weiter bevorzugt 5 bis 15 Gew.-%, insbesondere 8 bis 12 Gew.-% Aluminiumhydroxid (Al(OH)₃) auf, wobei die Gewichtsangaben jeweils bezogen sind auf das Gesamtgewicht der Verstärkungsschicht. Vorteilhaft enthält die Verstärkungsschicht Aluminiumhydroxid mit einer Schüttdichte von 600 bis 800 kg/m³, gemessen gemäß ISO 903. In diesen Schüttdichtebereich zeigt sich eine weitere Verstärkung des Brandschutzes. Weiter vorteilhaft beeinflusst werden kann der Brandschutz auch, wenn die spezifische Oberfläche des Aluminiumhydroxids speziell eingestellt wird. Hier hat sich ein Aluminiumhydroxid mit einer spezifischen Oberfläche (BET) von 1,5 bis 3,0 m²/g, gemessen gemäß DIN 66132, als besonders geeignet erwiesen.

In einer speziellen Ausgestaltung weist die Verstärkungsschicht Aluminiumhydroxid mit einem mittleren Partikeldurchmesser von 8 bis 14 µm, gemessen gemäß ISO 13320-1, auf. Kommerziell erhältlich sind solche Aluminiumhydroxide beispielsweise unter der Bezeichnung Reflamal^{®} S3 der Firma DADCO.

Die mehrschichtige Wärmeisolierplatte der vorliegenden Erfindung weist eine Verstärkungsschicht auf, die bevorzugt ein Flächengewicht von 200 bis 400 g/m², insbesondere 250 bis 350 g/m² aufweist.

Die erfindungsgemäß einzusetzende Verstärkungsschicht umfasst bevorzugt zusätzlich ein organisches polymeres Bindermaterial, vorzugsweise einen Binder ausgewählt aus der Gruppe bestehend aus Styrolbutadienbinder, Styrolacrylatbinder und Vinylacetat-Ethylen-Copolymer-Binder. Bevorzugt liegt der Binder (Bindermaterial) in der Verstärkungsschicht in einer Menge von 1 bis 12 Gew.-%, bevorzugt 2 bis 10 Gew.-%, weiter bevorzugt 3 bis 8 Gew.-% und insbesondere 4 bis 6 Gew.-%, jeweils bezogen auf das Gesamtgewicht der Verstärkungsschicht, vor.

Es hat sich gezeigt, dass die Verstärkungsschicht die erfindungsgemäße Wärmeisolierplatte nicht nur hinsichtlich ihrer Steifigkeit verstärkt, sondern zudem für einen verringerten Schrumpf und eine verringerte Welligkeit der Wärmeisolierplatte sorgt.

### Entkopplungsschicht

Ein weiterer Bestandteil der mehrschichtigen Wärmeisolierplatte der vorliegenden Erfindung ist eine Entkopplungsschicht c). Die Entkopplungsschicht weist eine erste Hauptfläche und eine der ersten Hauptfläche abgewandte zweite Hauptfläche auf. Die Entkopplungsschicht mit ihrer ersten Hauptfläche ist auf der zweiten Hauptfläche der Verstärkungsschicht angeordnet und mit dieser verbunden. Die Entkopplungsschicht c) umfasst ein oder mehrere Fasern und/oder Vliese, die ausgewählt sind aus der Gruppe bestehend aus Glasfaservlies, Polyestervlies, Glasgewebevlies, Glasgelegevlies und Glasfaser-/Polyestergemisch-Vlies.

In einer bevorzugten Ausgestaltung der Erfindung weist die Entkopplungsschicht Glasfasern oder ein Glasfaservlies auf, wobei vorzugsweise die Dicke der Fasern größer 8 µm, insbesondere 12 bis 20 µm, ist. Die Dicke der Fasern ist im Rahmen der vorliegenden Erfindung von besonderem Vorteil, da hierdurch ein idealer Abstand der Fasern zueinander erzeugt werden kann.

Vorteilhaft weist die die Entkopplungsschicht ein Flächengewicht von 30 bis 100 g/m², bevorzugt von 40 bis 90 g/m² und insbesondere von 50 bis 80 g/m² auf.

In einer bevorzugten Ausgestaltung weist die Entkopplungsschicht ein Glasfaser-/Polyester-Gemisch-Vlies auf, welches zwischen 5 bis 45 Gew.-%, vorzugsweise 10 bis 30 Gew.-% Polyesterfasern, enthält.

Die Entkopplungsschicht ist zwischen der Verstärkungsschicht und der Brandschutzschicht angeordnet und bevorzugt jeweils mit diesen verbunden.

Dadurch wird die zur Hauptschicht, vorzugsweise zum Polymerschaum, zeigende Seite von der Brandschutzschicht getrennt und entkoppelt. Diese spezielle Anordnung verbessert den Brandschutz, da die geringere weitergeleitete Temperatur dazu führt, dass die Hauptschicht, welche organisch polymeres Material umfasst, nicht innerhalb eines kurzen Zeitraums expandiert, was ein Reißen der Rückenschicht, umfassend Verstärkungsschicht, Entkopplungsschicht und Brandschutzschicht, zur Folge haben kann.

### Brandschutzschicht

Ein weiterer wesentlicher Bestandteil der mehrschichtigen Wärmeisolierplatte der vorliegenden Erfindung ist eine Brandschutzschicht. Die Brandschutzschicht ist vollständig oder teilweise auf der zweiten Hauptfläche der Entkopplungsschicht angeordnet und mit dieser verbunden. Die Brandschutzschicht weist expansives Graphit auf. Üblicherweise bildet die Brandschutzschicht eine der äußeren Schichten der mehrschichtigen Wärmeisolierplatte und ist daher mit keiner weiteren Schicht beschichtet oder steht mit keiner weiteren Schicht (ausgenommen der Entkopplungsschicht) in Kontakt.

Es hat sich gezeigt, dass für die mehrschichtige Wärmeisolierplatte der vorliegenden Erfindung expansives Graphit einen äußerst wirksamen Brandschutz bildet, insbesondere in Kombination mit den weiteren Schichten der Wärmeisolierplatte. Die Menge des expansiven Graphits ist auf ein optimales Maß einzustellen. In einer bevorzugten Ausgestaltung weist die Brandschutzschicht expansives Graphit in einer Menge von 10 bis 80 Gew.-% oder von 20 bis 60 Gew.-%, vorzugsweise 30 bis 50 Gew.-%, insbesondere 40 bis 50 Gew.-%, jeweils bezogen auf das Gesamtgewicht der Brandschutzschicht , auf.

Es hat sich überraschend gezeigt, dass Mischungen aus expansivem Graphit, die unterschiedliche Partikelgrößen zeigen, einen verbesserten Brandschutz bewirken, insbesondere hinsichtlich des entstehenden Blähschaums des expansiven Graphits. Erfindungsgemäß weist die Brandschutzschicht ein expansives Graphit (A) mit einer mittleren Teilchengröße D50 < 150 µm aufweist und ein expansives Graphit (B) mit einer mittleren Teilchengröße D50 von 180 bis 500 µm. Die Mischungen aus expansivem Graphit (A) und expansivem Graphit (B) können hinsichtlich ihrer Mischungsverhältnisse zusätzlich weiter optimiert werden um verbesserte Ergebnisse hinsichtlich des Brandschutzes der mehrschichtigen Wärmeisolierplatten zu erhalten. In einer bevorzugten Ausführungsform der erfindungsgemäßen Wärmeisolierplatte weist die Brandschutzschicht das zuvor genannte expansive Graphit (B) und expansive Graphit (A) in einem Gewichtsverhältnis von expansivem Graphit (B) zu expansivem Graphit (A) von > 1, vorzugsweise im Bereich von 2:1 bis 15:1, insbesondere 3:1 bis 10:1, speziell 4:1 bis 8:1 auf.

Zur Verbesserung der Brandschutzeigenschaften kann die Brandschutzschicht weitere Komponenten enthalten. In einer bevorzugten Ausgestaltung weist die Brandschutzschicht ein Polyphosphat, vorzugsweise Ammoniumpolyphosphat, speziell in einer Menge von 5 bis 25 Gew.-%, insbesondere 10 bis 20 Gew.-%, jeweils bezogen auf das Gesamtgewicht der Brandschutzschicht, auf.

In einer weiteren Ausführungsform weist die Brandschutzschicht zusätzlich Cyanurate auf. In einer speziellen Ausgestaltung weist die Brandschutzschicht Melamincyanurat, vorzugsweise in einer Menge von 1 bis 10 Gew.-%, weiter bevorzugt 2 bis 8 Gew.-%, speziell 2,5 bis 6 Gew.-%, jeweils bezogen auf das Gesamtgewicht der Brandschutzschicht , auf.

Es wurde überraschend gefunden, dass durch den Einsatz der zuvor genannten Cyanurate, insbesondere dem Melamincyanurat, und/oder den Polyphosphaten, insbesondere dem Ammoniumpolyphosphat (APP) eine Stabilisierung des aufgeblähten Graphitschaums erzielt werden kann. Der Graphitschaum ist von der Konsistenz her fester und lässt sich nicht durch einen Luftzug abtragen. Dies bewirkt einen vorteilhaften Brandschutz, da sich der Schaum fester auf der Oberfläche verteilt und ein Eindringen der Flammen wirksamer verhindert.

Die Brandschutzschicht kann darüber hinaus zusätzlich Kaolin enthalten. Der Einsatz von Kaolin fördert die flammhemmende Wirkung. Zusätzlich fördert das Kaolin die Verarbeitbarkeit beim Auftrag der Brandschutzschicht. In einer bevorzugten Ausgestaltung weist die Brandschutzschicht Kaolin, vorzugsweise in einer Menge von 2 bis 20 Gew.-%, weiter bevorzugt 4 bis 15 Gew.-%, jeweils bezogen auf das Gesamtgewicht der Brandschutzschicht, auf. Besonders geeignet für die Brandschutzschicht ist Kaolin mit einer mittleren Teilchengröße D50 im Bereich von 5 bis 10 µm.

In einer bevorzugten Ausgestaltung weist die Brandschutzschicht ein Bindemittel, vorzugsweise ein organisches Bindemittel, auf. Besonders geeignet sind organisch polymere Bindemittel, welche besonders bevorzugt Vinylacetatmonomereinheiten aufweisen, und insbesondere ein Vinylacetatethylencopolymer ist.

Speziell für Außenanwendungen können auch wasserfeste Acrylat/Styrolacrylat Bindemittel zur Anwendung kommen. Da die Brandschutzschicht üblicherweise die äußere Schicht der Wärmeisolierschicht darstellt, die auch Witterungseinflüssen ausgesetzt sein kann, ist es vorteilhaft, dass die Brandschutzschicht zusätzlich Hydrophobierungsmittel aufweist.

Generell haben sich polymere Bindemittel als besonders geeignet für die Brandschutzschicht erwiesen dessen Filmeigenschaften hinsichtlich der Zugfestigkeit unterhalb von 20 N/mm², vorzugsweise unterhalb von 10 N/mm², insbesondere von 1 bis 8 N/mm² gemessen gemäß UNI 8490-17, liegt. Dies ermöglicht der Brandschutzschicht eine hinreichende Flexibilität und verhindert ein Einreißen der Schicht.

In einer weiteren Ausgestaltung der Erfindung weist die Brandschutzschicht Polyethylenoxid auf. Der Einsatz von Polyethylenoxid sorgt insbesondere bei der Verarbeitung zu Verbesserungen. Beim Auftragen der Schicht lässt sich durch Einsatz von Polyethylenoxid eine verbesserte Gleitwirkung der Auftragsmasse erzielen. Gleichzeitig führt der Einsatz von Polyethylenoxid jedoch nicht zu einer wesentlichen Beeinträchtigung der Brandschutzwirkung. Durch den Einsatz von Gleitmitteln, insbesondere des Polyethylenoxids, kann verhindert werden, dass es bei dem Schichtauftragen zu einem Stau der Graphitpartikel am Rakel kommt.

Üblicherweise ist das Flächengewicht der Brandschutzbeschichtung mit dem expansiven Graphit so eingestellt, dass eine optimale Brandschutzwirkung erzielt werden kann. Bevorzugt liegt das Flächengewicht dazu in einem Bereich von 200 bis 400 g/m². Bei einem Flächengewicht oberhalb von 400 g/m² steigt die Gefahr, dass sich Risse während des Aufblähens des Graphits entstehen. Diese Risse ermöglichen den Flammen im Brandfall Wege, was nachteilig ist. Ein geringeres Flächengewicht als 200 g/m² birgt das Risiko, dass im Brandfall nicht ausreichend Brandschutzmittel vorhanden ist.

Ein weiterer Gegenstand der vorliegenden Erfindung ist ein Verfahren zur Herstellung einer Rückenschicht für eine Wärmeisolierplatte umfassend die folgenden Schritte:
i) Bereitstellen einer Entkopplungsschicht (30) mit einer ersten Hauptfläche und eine der ersten Hauptfläche abgewandten zweiten Hauptfläche, wobei die Entkopplungsschicht (30) ein oder mehrere Fasern und/oder Vliese umfasst, die ausgewählt sind aus der Gruppe bestehend aus Glasfaservlies, Polyestervlies, Glasgewebevlies, Glasgelegevlies und Glasfaser-/Polyester-Gemisch-Vlies, wobei die Entkopplungsschicht (30) vorzugsweise zusätzlich einen organischen Binder aufweist;
ii) Auftragen einer Verstärkungsschicht (20) auf der ersten Hauptfläche der Entkopplungsschicht (30), wobei die Verstärkungsschicht (20) anorganische Salze in einer Menge von wenigstens 50 Gew.-%, bezogen auf das Trockengewicht der Verstärkungsschicht (20), aufweist;
iii) gegebenenfalls Trocknen der Entkopplungsschicht (30) und der Verstärkungsschicht (20);
iv) Auftragen einer Brandschutzschicht (40) auf der zweiten Hauptfläche der Entkopplungsschicht (30), wobei die Brandschutzschicht (40) expansives Graphit (A) mit einer mittleren Teilchengröße D50 < 150 µm und ein expansives Graphit (B) mit einer mittleren Teilchengröße D50 von 180 bis 500 µm aufweist und
v) gegebenenfalls Trocknen der Entkopplungsschicht (30) und der Brandschutzschicht (40).

Ein weiterer Gegenstand der Erfindung ist eine Rückenschicht umfassend
- eine Entkopplungsschicht (30) mit einer ersten Hauptfläche und eine der ersten Hauptfläche abgewandten zweiten Hauptfläche, wobei die Entkopplungsschicht (30) ein oder mehrere Fasern und/oder Vliese umfasst, die ausgewählt sind aus der Gruppe bestehend aus Glasfaservlies, Polyestervlies, Glasgewebevlies, Glasgelegevlies und Glasfaser-/Poly-ester-Gemisch-Vlies,
- eine Verstärkungsschicht (20), die auf der ersten Hauptfläche der Entkopplungsschicht (30) aufgebracht und mit dieser verbunden ist, wobei die Verstärkungsschicht (20) anorganische Salze in einer Menge von wenigstens 50 Gew.-%, bezogen auf das Gesamtgewicht der Verstärkungsschicht (20), aufweist; und
- eine Brandschutzschicht (40), die auf der zweiten Hauptfläche der Entkopplungsschicht (30) aufgebraucht und mit dieser verbunden ist, wobei die Brandschutzschicht (40) expansives Graphit (A) mit einer mittleren Teilchengröße D50 < 150 µm und ein expansives Graphit (B) mit einer mittleren Teilchengröße D50 von 180 bis 500 µm aufweist.

Zusammensetzung und Aufbau der erfindungsgemäßen Rückenschicht, insbesondere hinsichtlich der Entkopplungsschicht, der Verstärkungsschicht sowie der Brandschutzschicht, wurden bereits zuvor im Zusammenhang mit der erfindungsgemäßen mehrschichtigen Wärmeisolierplatte erläutert.

Ein weiterer Gegenstand der Erfindung ist ein Verfahren zur Herstellung einer mehrschichtigen Wärmeisolierplatte zur Wärmedämmung für Gebäude gemäß der vorliegenden Erfindung, wobei eine erfindungsgemäße Rückenschicht, wie zuvor definiert, bereitgestellt wird und auf der ersten Hauptfläche der Verstärkungsschicht (20) eine Hauptschicht (10) aus thermisch isolierendem organisch-polymerem Material aufgebracht und mit der Verstärkungsschicht (20) verbunden wird.

Ein weiterer Gegenstand der vorliegenden Erfindung ist eine mehrschichtige Wärmeisolierplatte zur Wärmedämmung für Gebäude umfassend eine Hauptschicht (10) aus thermisch isolierendem organisch-polymerem Material, die eine erste Hauptfläche und eine der ersten Hauptfläche abgewandte zweite Hauptfläche aufweist;
- eine erste Rückenschicht auf der Hauptschicht (10), die mit der Hauptschicht (10) entlang der ersten Hauptfläche der Hauptschicht verbunden ist;
- eine zweite Rückenschicht der Hauptschicht (10), die mit der Hauptschicht (10) entlang der zweiten Hauptfläche der Hauptschicht verbunden ist, wobei die erste und/oder die zweite Rückenschicht eine Rückenschicht, wie vorangehend definiert, ist.

In einer bevorzugten Ausgestaltung umfasst die mehrschichtige Wärmeisolierplatte zur Wärmedämmung für Gebäude eine Hauptschicht (10) aus thermisch isolierendem organisch-polymerem Material, die eine erste Hauptfläche und eine der ersten Hauptfläche abgewandten zweiten Hauptfläche aufweist;
- eine erste Rückenschicht auf der Hauptschicht (10), die mit der Hauptschicht (10) entlang der ersten Hauptfläche der Hauptschicht und entlang der ersten Hauptfläche der Verstärkungsschicht verbunden ist;
- eine zweite Rückenschicht der Hauptschicht (10), die mit der Hauptschicht (10) entlang der zweiten Hauptfläche der Hauptschicht und entlang der ersten Hauptfläche der Verstärkungsschicht verbunden ist, wobei die erste und die zweite Rückenschicht eine erfindungsgemäße Rückenschicht, wie vorangehend definiert, ist.

Die erfindungsgemäßen mehrschichtigen Wärmeisolierplatten kommen auf vielfältigste Weise zum Einsatz, insbesondere für die Wärmeisolierung in Gebäuden. Ein weiterer Gegenstand der Erfindung ist daher die Verwendung einer erfindungsgemäßen mehrschichtigen Wärmeisolierplatte zur Wärmedämmung für Gebäude, insbesondere zur Wärmedämmung für hinterlüftete Fassaden.

### Figurenbeschreibung

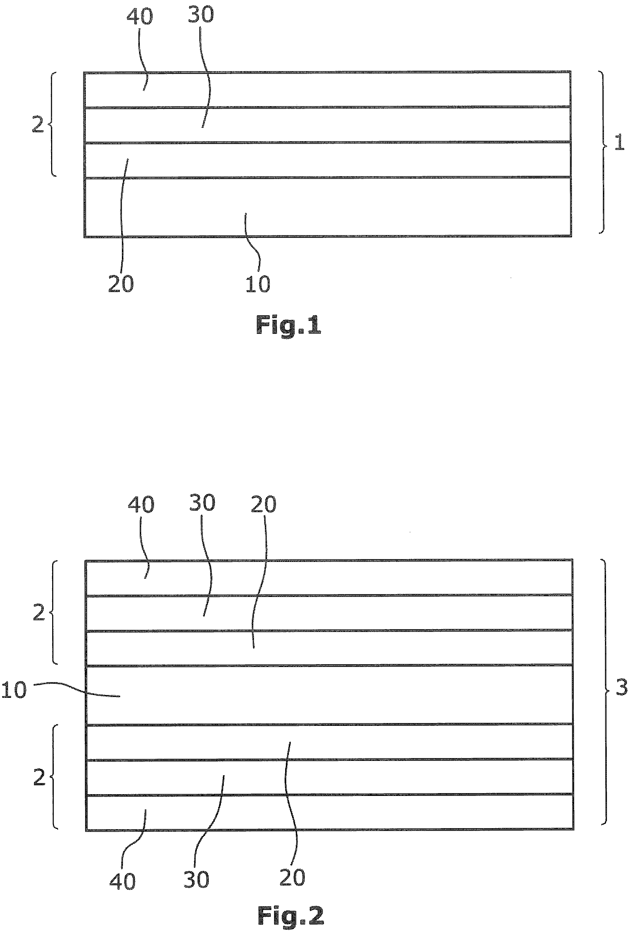

- Fig. 1: zeigt eine erfindungsgemäße mehrschichtige Wärmeisolierplatte (1), die einseitig mit einer Rückenschicht (2) versehen ist. Die Wärmeisolierplatte (1) weist die Hauptschicht (10), die Verstärkungsschicht (20), die Entkopplungsschicht (30) und die Brandschutzschicht (40) auf.
- Fig. 2: zeigt eine alternative mehrschichtige Wärmeisolierplatte (1) mit 2 Rückenlagen (2), die jeweils eine Verstärkungsschicht (20), eine Entkopplungsschicht (30) und eine jeweils außen liegende Brandschutzschicht (40) aufweisen und wobei die Hauptschicht (10) jeweils mit den Verstärkungsschichten (20) in Kontakt stehen und verbunden sind.

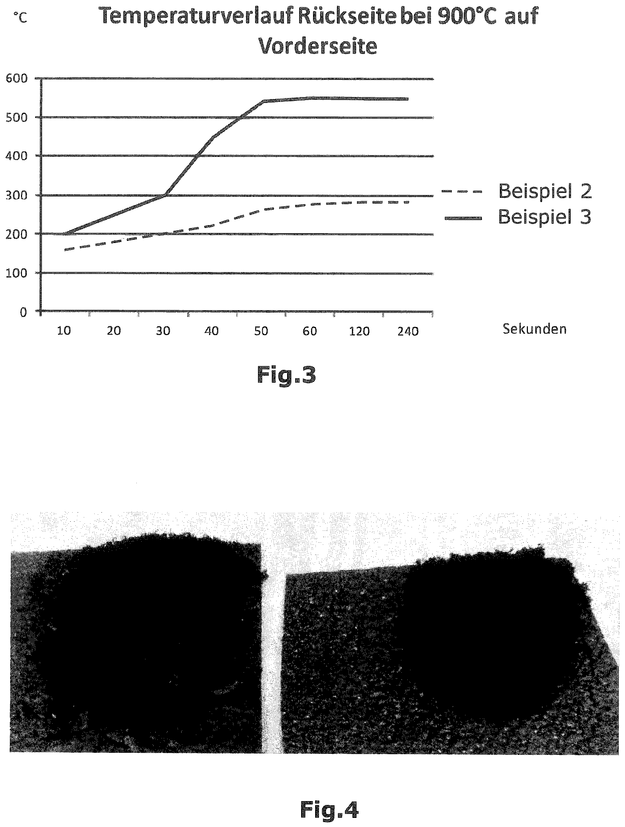

- Fig. 3: zeigt den Temperaturverlauf auf der Rückseite der Rückenlage (an der Verstärkungsschicht) gemäß Beispiel 2 (gestrichelte Linie) und Beispiel 3 (durchgängige Linie). Die Vorderseite wird mit 900 °C beaufschlagt mit Bunsenbrenner (horizontal).
- Fig.4: Die rechte Abbildung zeigt einen stabilen expandierten Graphitschaum wie er mit einer Brandschutzschicht gemäß Beispiel 1 und 2 erhalten wird.
Der Schaum ist stabil und es lösen sich beim Beflammen nur geringste Partikel vom Schaum, bedingt durch die Thermik. Bei einer Temperaturbeaufschlagung von 900 °C auf der Vorderseite ist auf der Rückseite nur eine Temperatur von ca. 280 °C messbar.
Die linke Abbildung zeigt den Schaum, wie er mit einer Beschichtung gemäß Beispiel 3 gebildet wird.
Der Schaum ist weniger stabil und beim Beflammen lösen sich nahezu alle Partikel vom Schaum, bedingt durch die Thermik. Bei einer Temperaturbeaufschlagung von 900 °C auf der Vorderseite ist auf der Rückseite eine Temperatur von ca. 550 °C messbar.

### Beispiele

Die erfindungsgemäßen Gegenstände kommen insbesondere zum Einsatz, wenn die Brandschutzbestimmungen eine schwer entflammbare Dämmstofflage erfordern oder eine schwerentflammbare Decklage ein Produkt vor Brandweiterleitung schützen soll.

Beispielsweise kann eine PU-Wärmedämmplatte mit der erfindungsgemäßen Decklage in die Baustoffklasse B1 nach DIN 4102-1 erreichen. Nach DIN EN 13501-1 in Klasse B oder C.

### Beispiel 1

Aufbau einer erfindungsgemäßen Rückenschicht umfassend Verstärkungsschicht, Entkopplungsschicht und Brandschutzschicht:
Ein beispielhafter Aufbau einer erfindungsgemäßen Rückschicht weist für die einzelnen Schichten die folgenden Flächengewichte auf:
Verstärkungsschicht: 290 g/m²
Entkopplungsschicht: Glasfaservlies 70 g/m²
Brandschutzschicht mit Blähgraphit: 280 g/m²

Die Zusammensetzungen der einzelnen Schichten werden nachfolgend näher beschrieben:

**1. Zusammensetzung der Verstärkungsschicht**

| **Komponente** | **Gew.-%** |
|---|---|
| Styrolbutadien-Binder (DOW XZ 92087) | 4,74% |
| Aluminiumhydroxid¹⁾ | 10,82% |
| Calciumcarbonat | 82,54% |
| Zinkstearat | 0,88% |
| Hydroxyethylcellulose (Tylose 100000 YP2) | 0,85% |
| Weitere Bestandteile (Netzmittel, Entschäumer, Konservierungsmittel) | ad 100 |
| ¹⁾ BET 4m²/g, D50 = 10 µm, Dichte 0,95 kg/l | |

Die Zusammensetzung der Verstärkungsschicht wird in Wasser (Feststoffanteil der Beschichtungsmasse ist 73 %) aufgeschlämmt und auf das Glasfaserflies (Entkopplungsschicht) aufgetragen und anschließend getrocknet. Das Glasfaserflies weist ein Flächengewicht von 70 g/m² auf und hat eine Faserdicke von 13 µm.

**2. Zusammensetzung der Brandschutzschicht (Beispiel 2)**

| **Komponente** | **Gew.-%** | **Erläuterung** |
|---|---|---|
| Vinylacetat-Etylen-Copolymer-Binder (Vinavil EVA 4612) | 20,91% | EVA-Bindemittel |
| Styrolacrylat (Makrovil D 343) | 1,55% | AC-Bindemittel |
| Melamincyanurat | 3,82% | Flammschutz |
| Ammoniumpolyphosphat (FR CROS 486 Silan) | 15,83% | Flammschutz APP |
| Kaolin (Chinafill 200) | 9,64% | Kaolin |
| ES 100 C10 ²⁾ | 6,37% | Expansives Graphit fein |
| ES 200 B8 DS ³⁾ | 38,57% | Expansives Graphit grob |
| Polyethylenoxid | 0,07% | Polyethylenoxid (Gleitmittel) |
| Polyurethan-Verdicker (Borchi Gel 0435) | 0,76% | PU-Verdicker |
| Acrylat-Verdicker (Mirox VD 65) | 0,99% | Acrylat-Verdicker |
| Weitere Komponenten (Netzmittel, Konservierungsmittel, Entschäumer, etc.) | ad 100% | |
| ²⁾ Partikelgröße: D50 < 150 µm | | |
| ³⁾ Partikelgröße: D50: 180 - 500 µm | | |

Die Zusammensetzung der Brandschutzbeschichtung wird in Wasser (Feststoffanteil der Beschichtungsmasse ist 55 %) aufgeschlämmt und anschließend auf der gegenüberliegenden Seite des Glasfaservlieses aufgetragen und anschließend getrocknet.

Die Beschichtungsmasse wird auf ein Vlies gepumpt und durch ein Rakel mit unterliegender Walze (Rakel-Walze-System) gleichmäßig verteilt.

**3. Alternative Zusammensetzung der Brandschutzschicht (Beispiel 3)**

| **Wasser** | **Gew.-%** | **Erläuterung** |
|---|---|---|
| Vinylacetat-Etylen-Copolymer-Binder (Vinavil EVA 4612) | 20,91 % | EVA-Bindemittel |
| Styrolacrylat (Makrovil D 343) | 1,55% | AC-Bindemittel |
| MC 25 Slurry | 0% | Flammschutz Melamincyanurat |
| FR CROS 486 Silan | 0% | Flammschutz APP |
| Alfrimal 466 | 13% | Flammschutz ATH |
| Chinafill 200 | 9,64% | Kaolin |
| ES 100 C10 < 150 | 6,37% | Expansives Graphit fein |
| ES 200 B8 DS | 38,57% | Expansives Graphit grob |
| Slipping Agent | 0,07% | Polyethylenoxid (Gleitmittel) |
| Borchi Gel 0435 | 0,76% | PU-Verdicker |
| Mirox VD 65 | 0,99% | Acrylat-Verdicker |
| Weitere Komponenten (Netzmittel, Konservierungsmittel, Entschäumer, etc.) | ad 100% | |

## Patentansprüche

1. Rückenschicht (2) für eine Wärmeisolierplatte umfassend
- eine Entkopplungsschicht (30) mit einer ersten Hauptfläche und eine der ersten Hauptfläche abgewandten zweiten Hauptfläche, wobei die Entkopplungsschicht (30) ein oder mehrere Fasern und/oder Vliese umfasst, die ausgewählt sind aus der Gruppe bestehend aus Glasfaservlies, Polyestervlies, Glasgewebevlies, Glasgelegevlies und Glasfaser-/Polyester-Gemisch-Vlies,
- eine Verstärkungsschicht (20), die auf der ersten Hauptfläche der Entkopplungsschicht (30) aufgebracht und mit dieser verbunden ist, wobei die Verstärkungsschicht (20) anorganische Salze in einer Menge von wenigstens 50 Gew.-%, bezogen auf das Gesamtgewicht der Verstärkungsschicht (20), aufweist; und
- eine Brandschutzschicht (40), die auf der zweiten Hauptfläche der Entkopplungsschicht (30) aufgebraucht und mit dieser verbunden ist,
**dadurch gekennzeichnet, dass** die Brandschutzschicht (40) ein expansives Graphit (A) mit einer mittleren Teilchengröße D50 < 150 µm in einer Menge von 3 bis 10 Gew.-% und ein expansives Graphit (B) mit einer mittleren Teilchengröße D50 von 180 bis 500 µm in einer Menge von 20 bis 50 Gew.-%, jeweils bezogen auf das Gesamtgewicht der Brandschutzschicht (40), aufweist.

2. Rückenschicht gemäß Anspruch 1
**dadurch gekennzeichnet, dass** die Verstärkungsschicht (20) 1,5 bis 20 Gew.-%, vorzugsweise 2 bis 18 Gew.-%, weiterbevorzugt 5 bis 15 Gew.-%, insbesondere 8 bis 12 Gew.-% Aluminiumhydroxid (Al(OH)₃) aufweist, wobei die Gewichtsangaben jeweils bezogen sind auf das Gesamtgewicht der Verstärkungsschicht (20).

3. Rückenschicht gemäß Anspruch 1 oder 2
**dadurch gekennzeichnet, dass** die Entkopplungsschicht (30) ein Flächengewicht von 30 bis 100 g/m², bevorzugt 40 bis 90 g/m2 und insbesondere 50 bis 80 g/m² aufweist.

4. Rückenschicht gemäß einem oder mehreren der vorstehenden Ansprüche
**dadurch gekennzeichnet, dass** die Brandschutzschicht (40) expansives Graphit in einer Menge von 30 bis 50 Gew.-%, insbesondere 40 bis 50 Gew.-%, jeweils bezogen auf das Gesamtgewicht der Brandschutzschicht (40), aufweist.

5. Rückenschicht gemäß einem oder mehreren der vorstehenden Ansprüche
**dadurch gekennzeichnet, dass** die Brandschutzschicht (40) ein Polyphosphat, vorzugsweise Ammoniumpolyphosphat, speziell in einer Menge von 5 bis 25 Gew.-%, insbesondere 10 bis 20 Gew.-%, jeweils bezogen auf das Gesamtgewicht der Brandschutzschicht (40), aufweist.

6. Rückenschicht gemäß einem oder mehreren der vorstehenden Ansprüche
**dadurch gekennzeichnet, dass** die Brandschutzschicht (40) Melamincyanurat, vorzugsweise in einer Menge von 1 bis 10 Gew.-%, weiter bevorzugt 2 bis 8 Gew.-%, speziell 2,5 bis 6 Gew.-%, jeweils bezogen auf das Gesamtgewicht der Brandschutzschicht (40), aufweist.

7. Rückenschicht gemäß einem oder mehreren der vorstehenden Ansprüche
**dadurch gekennzeichnet, dass** die Brandschutzschicht (40) ein Bindemittel, vorzugsweise ein organisches Bindemittel aufweist.

8. Rückenschicht gemäß einem oder mehreren der vorstehenden Ansprüche
**dadurch gekennzeichnet, dass** die Brandschutzschicht (40) Polyethylenoxid aufweist.

9. Verfahren zur Herstellung einer Rückenschicht für eine Wärmeisolierplatte umfassend die folgenden Schritte:
i) Bereitstellen einer Entkopplungsschicht (30) mit einer ersten Hauptfläche und eine der ersten Hauptfläche abgewandten zweiten Hauptfläche, wobei die Entkopplungsschicht (30) ein oder mehrere Fasern und/oder Vliese umfasst, die ausgewählt sind aus der Gruppe bestehend aus Glasfaservlies, Polyestervlies, Glasgewebevlies, Glasgelegevlies und Glasfaser-/Polyester-Gemisch-Vlies, wobei die Entkopplungsschicht (30) vorzugsweise zusätzlich einen organischen Binder aufweist;
ii) Auftragen einer Verstärkungsschicht (20) auf der ersten Hauptfläche der Entkopplungsschicht (30), wobei die Verstärkungsschicht (20) anorganische Salze in einer Menge von wenigstens 50 Gew.-%, bezogen auf das Trockengewicht der Verstärkungsschicht (20), aufweist;
iii) gegebenenfalls Trocknen der Entkopplungsschicht (30) und der Verstärkungsschicht (20);
iv) Auftragen einer Brandschutzschicht (40) auf der zweiten Hauptfläche der Entkopplungsschicht (30), wobei die Brandschutzschicht (40) ein expansives Graphit (A) mit einer mittleren Teilchengröße D50 < 150 µm in einer Menge von 3 bis 10 Gew.-% und ein expansives Graphit (B) mit einer mittleren Teilchengröße D50 von 180 bis 500 µm in einer Menge von 20 bis 50 Gew.-%, jeweils bezogen auf das Gesamtgewicht der Brandschutzschicht (40), aufweist und
v) gegebenenfalls Trocknen der Entkopplungsschicht (30) und der Brandschutzschicht (40).

10. Mehrschichtige Wärmeisolierplatte zur Wärmedämmung für Gebäude umfassend:
a) eine Hauptschicht (10) aus thermisch isolierendem organisch-polymerem Material, die eine erste Hauptfläche und eine der ersten Hauptfläche abgewandten zweiten Hauptfläche aufweist; und
b) eine Rückenschicht (2) gemäß einem oder mehreren der Ansprüche 1 bis 8, wobei die Verstärkungsschicht (20) eine erste Hauptfläche und eine der ersten Hauptfläche abgewandte zweiten Hauptfläche aufweist und wobei die Verstärkungsschicht (20) mit der Hauptschicht (10) entlang der ersten Hauptfläche der Hauptschicht (10) und entlang der ersten Hauptfläche der Verstärkungsschicht (20) verbunden ist und wobei die Entkopplungsschicht (30) mit der ersten Hauptfläche der Entkopplungsschicht (30) auf der Verstärkungsschicht (20) angeordnet ist und mit dieser verbunden ist.

11. Mehrschichtige Wärmeisolierplatte gemäß Anspruch 10,
**dadurch gekennzeichnet, dass** die Hauptschicht (10), welche ein thermisch isolierendes organisch-polymeres Material umfasst oder daraus besteht und ausgewählt ist
aus der Gruppe bestehend aus Polyurethan, Polyisocyanurat, Polystyrol und Phenolharz sowie Mischungen hiervon.

12. Verfahren zur Herstellung einer mehrschichtigen Wärmeisolierplatte zur Wärmedämmung für Gebäude
**dadurch gekennzeichnet, dass** eine Rückenschicht gemäß einem oder mehreren der Ansprüche 1 bis 8 bereitgestellt und auf der ersten Hauptfläche der Verstärkungsschicht (20) eine Hauptschicht (10) aus thermisch isolierendem organisch-polymerem Material aufgebracht und mit der Verstärkungsschicht (20) verbunden wird.

13. Mehrschichtige Wärmeisolierplatte zur Wärmedämmung für Gebäude umfassend eine Hauptschicht (10) aus thermisch isolierendem organisch-polymerem Material, die eine erste Hauptfläche und eine der ersten Hauptfläche abgewandten zweiten Hauptfläche aufweist;
- eine erste Rückenschicht auf der Hauptschicht (10), die mit der Hauptschicht (10) entlang der ersten Hauptfläche der Hauptschicht verbunden ist;
- eine zweite Rückenschicht der Hauptschicht (10), die mit der Hauptschicht (10) entlang der zweiten Hauptfläche der Hauptschicht verbunden ist, wobei die erste und/oder die zweite Rückenschicht eine Rückenschicht gemäß einem oder mehreren der Ansprüche 1 bis 8 ist.

14. Mehrschichtige Wärmeisolierplatte zur Wärmedämmung für Gebäude gemäß Anspruch 13 umfassend eine Hauptschicht (10) aus thermisch isolierendem organisch-polymerem Material, die eine erste Hauptfläche und eine der ersten Hauptfläche abgewandte zweite Hauptfläche aufweist;
- eine erste Rückenschicht auf der Hauptschicht (10), die mit der Hauptschicht (10) entlang der ersten Hauptfläche der Hauptschicht und entlang der ersten Hauptfläche der Verstärkungsschicht verbunden ist;
- eine zweite Rückenschicht der Hauptschicht (10), die mit der Hauptschicht (10) entlang der zweiten Hauptfläche der Hauptschicht und entlang der ersten Hauptfläche der Verstärkungsschicht verbunden ist, wobei die erste und die zweite Rückenschicht eine Rückenschicht gemäß einem oder mehreren der Ansprüche 1 bis 8 ist.

15. Verwendung einer mehrschichtigen Wärmeisolierplatte gemäß einem der Ansprüche 10 oder 11 zur Wärmedämmung für Gebäude, insbesondere zur Wärmedämmung für hinterlüftete Fassaden.

## Claims

1. A back layer (2) for a heat insulation board, comprising:
- a decoupling layer (30) having a first major surface and a second major surface opposite said first major surface, wherein said decoupling layer (30) comprises one or more fibers and/or nonwovens selected from the group consisting of glass-fiber mat, polyester non-woven, glass fabric mat, glass scrim mat, and glass fiber/polyester blend non-woven;
- a reinforcing layer (20) provided on and bonded to the first major surface of the decoupling layer (30), wherein said reinforcing layer (20) contains inorganic salts in a quantity of at least 50% by weight, based on the total weight of the reinforcing layer (20); and
- a fire-protection layer (40) provided on and bonded to the second major surface of the decoupling layer (30),
**characterized in that** said fire-protection layer (40) contains an expandable graphite (A) having an average particle size D50 < 150 µm in an amount of from 3% to 10% by weight, and an expandable graphite (B) having an average particle size D50 of from 180 to 500 µm in an amount of from 20% to 50% by weight, respectively based on the total weight of the fire-protection layer (40).

2. The back layer according to claim 1,
**characterized in that** the reinforcing layer (20) contains from 1.5 to 20% by weight, preferably from 2 to 18% by weight, more preferably from 5 to 15% by weight, especially from 8 to 12% by weight, of aluminum hydroxide (Al(OH)₃), the stated weight percentages being respectively based on the total weight of the reinforcing layer (20).

3. The back layer according to claim 1 or 2,
**characterized in that** the decoupling layer (30) has a base weight of from 30 to 100 g/m², preferably from 40 to 90 g/m², especially from 50 to 80 g/m².

4. The back layer according to one or more of the preceding claims,
**characterized in that** the fire-protection layer (40) contains expandable graphite in an amount of from 30 to 50% by weight, especially from 40 to 50% by weight, respectively based on the total weight of the fire-protection layer (40).

5. The back layer according to one or more of the preceding claims,
**characterized in that** the fire-protection layer (40) contains a polyphosphate, preferably ammonium polyphosphate, especially in an amount of from 5 to 25% by weight, especially from 10 to 20% by weight, respectively based on the total weight of the fire-protection layer (40).

6. The back layer according to one or more of the preceding claims,
**characterized in that** the fire-protection layer (40) contains melamine cyanurate, preferably in an amount of from 1 to 10% by weight, more preferably from 2 to 8% by weight, especially from 2.5 to 6% by weight, respectively based on the total weight of the fire-protection layer (40).

7. The back layer according to one or more of the preceding claims,
**characterized in that** the fire-protection layer (40) contains a binder, preferably an organic binder.

8. The back layer according to one or more of the preceding claims,
**characterized in that** the fire-protection layer (40) contains polyethylene oxide.

9. A process for preparing a back layer for a heat insulation board, comprising the following steps:
i) providing a decoupling layer (30) having a first major surface and a second major surface opposite said first major surface, wherein said decoupling layer (30) comprises one or more fibers and/or nonwovens selected from the group consisting of glass-fiber mat, polyester non-woven, glass fabric mat, glass scrim mat, and glass fiber/polyester blend non-woven, preferably said decoupling layer (30) additionally containing an organic binder;
ii) applying a reinforcing layer (20) to the first major surface of the decoupling layer (30), said reinforcing layer (20) containing inorganic salts in a quantity of at least 50% by weight, based on the dry weight of the reinforcing layer (20);
iii) optionally drying the decoupling layer (30) and the reinforcing layer (20);
iv) applying a fire-protection layer (40) to the second major surface of the decoupling layer (30), said fire-protection layer (40) containing an expandable graphite (A) having an average particle size D50 < 150 µm in an amount of from 3% to 10% by weight, and an expandable graphite (B) having an average particle size D50 of from 180 to 500 µm in an amount of from 20% to 50% by weight, respectively based on the total weight of the fire-protection layer (40); and
v) optionally drying the decoupling layer (30) and the fire-protection layer (40).

10. A multilayer heat insulation board for thermal insulation for buildings, comprising:
a) a main layer (10) of thermally insulating organic-polymeric material having a first major surface and a second major surface opposite said first major surface; and
b) a back layer (2) according to one or more of claims 1 to 8, wherein said reinforcing layer (20) has a first major surface and a second major surface opposite said first major surface, wherein said reinforcing layer (20) is bonded to the main layer (10) along the first major surface of the main layer (10) and along the first major surface of the reinforcing layer (20), and wherein said decoupling layer (30), with the first major surface of the decoupling layer (30), is provided on and bonded to said reinforcing layer (20).

11. A multilayer heat insulation board according to claim 10,
**characterized in that** said main layer (10) comprising or consisting of a thermally insulating organic-polymeric material is selected from the group consisting of polyurethane, polyisocyanurate, polystyrene and phenolic resin, and mixtures thereof.

12. A process for preparing a multilayer heat insulation board for thermal insulation for buildings,
**characterized in that** a back layer according to one or more of claims 1 to 8 is provided, and a main layer (10) of a thermally insulating organic-polymeric material is applied to the first major surface of the reinforcing layer (20) and bonded to the reinforcing layer (20).

13. A multilayer heat insulation board for thermal insulation for buildings, comprising a main layer (10) of a thermally insulating organic-polymeric material having a first major surface and a second major surface opposite said first major surface;
- a first back layer on the main layer (10), bonded to the main layer (10) along the first major surface of the main layer;
- a second back layer on the main layer (10), bonded to the main layer (10) along the second major surface of the main layer, wherein said first and/or second back layers is/are a back layer according to one or more of claims 1 to 8.

14. The multilayer heat insulation board for thermal insulation for buildings according to claim 13, comprising a main layer (10) of a thermally insulating organic-polymeric material having a first major surface and a second major surface opposite said first major surface;
- a first back layer on the main layer (10), bonded to the main layer (10) along the first major surface of the main layer and along the first major surface of the reinforcing layer;
- a second back layer on the main layer (10), bonded to the main layer (10) along the second major surface of the main layer and along the first major surface of the reinforcing layer, wherein said first and second back layers are back layers according to one or more of claims 1 to 8.

15. Use of a multilayer heat insulation board according to either of claims 10 or 11 for thermal insulation for buildings, especially for thermal insulation for ventilated facades.

## Revendications

1. Couche arrière (2) pour une plaque d'isolation thermique, comprenant
- une couche de découplage (30) avec une première surface majeure et une seconde surface majeure opposée à ladite première surface majeure, dans laquelle ladite couche de découplage (30) comprend une ou plusieurs fibres et/ou non-tissés qui sont choisis dans le groupe consistant en non-tissé en fibres de verre, non-tissé de polyester, tissu de verre textile, non-tissé de canevas de verre, et non-tissé mélangé de fibres de verre/polyester,
- une couche de renforcement (20) procurée sur et reliée à la première surface majeure de la couche de découplage (30), dans laquelle la couche de renforcement (20) contient des sels inorganiques dans une quantité d'au moins 50 % en poids, par rapport au poids total de la couche de renforcement (20), et
- une couche résistante au feu (40) procurée sur et reliée à la seconde surface majeure de la couche de découplage (30),
**caractérisée en ce que**
ladite couche résistante au feu (40) contient un graphite gonflable (A) avec une granulométrie moyenne D50 < 150 µm en une quantité de 3 à 10 % en poids, et un graphite gonflable (B) avec une granulométrie moyenne D50 allant de 180 à 500 µm en une quantité de 20 à 50 % en poids, respectivement par rapport au poids total de la couche résistante au feu (40).

2. Couche arrière selon la revendication 1,
**caractérisée en ce que** la couche de renforcement (20) contient 1,5 à 20 % en poids, de préférence 2 à 18 % en poids, de préférence encore 5 à 15 % en poids, notamment 8 à 12 % en poids, d'hydroxyde d'aluminium (Al(OH)₃), dans laquelle les pourcentages en poids sont respectivement basés sur le poids total de la couche de renforcement (20).

3. Couche arrière selon la revendication 1 ou 2,
**caractérisée en ce que** la couche de découplage (30) présente un grammage de 30 à 100 g/m², de préférence 40 à 90 g/m², et notamment 50 à 80 g/m².

4. Couche arrière selon l'une ou plusieurs des revendications précédentes,
**caractérisée en ce que** la couche résistante au feu (40) présente du graphite gonflable en une quantité de 30 à 50 % en poids, notamment 40 à 50 % en poids, respectivement par rapport au poids total de la couche résistante au feu (40).

5. Couche arrière selon l'une ou plusieurs des revendications précédentes,
**caractérisée en ce que** la couche résistante au feu (40) contient un polyphosphate, de préférence le polyphosphate d'ammonium, notamment en une quantité de 5 à 25 % en poids, notamment 10 à 20 % en poids, respectivement par rapport au poids total de la couche résistante au feu (40).

6. Couche arrière selon l'une ou plusieurs des revendications précédentes,
**caractérisée en ce que** la couche résistante au feu (40) contient du cyanurate de mélamine, de préférence en une quantité de 1 à 10 % en poids, de préférence encore 2 à 8 % en poids, notamment 2,5 à 6 % en poids, respectivement par rapport au poids total de la couche résistante au feu (40).

7. Couche arrière selon l'une ou plusieurs des revendications précédentes,
**caractérisée en ce que** la couche résistante au feu (40) contient un liant, de préférence un liant organique.

8. Couche arrière selon l'une ou plusieurs des revendications précédentes,
**caractérisée en ce que** la couche résistante au feu (40) contient de l'oxyde de polyéthylène.

9. Procédé pour produire une couche arrière pour une plaque d'isolation thermique, comprenant les étapes consistant à
i) procurer une couche de découplage (30) avec une première surface majeure et une seconde surface majeure opposée à ladite première surface majeure, dans laquelle ladite couche de découplage (30) comprend une ou plusieurs fibres et/ou non-tissés qui sont choisis dans le groupe consistant en non-tissé en fibres de verre, non-tissé de polyester, tissu de verre textile, non-tissé de canevas de verre, et non-tissé mélangé de fibres de verre/polyester, dans lequel la couche de découplage (30) de préférence contient en outre un liant organique,
ii) appliquer une couche de renforcement (20) sur la première surface majeure de la couche de découplage (30), dans laquelle la couche de renforcement (20) contient des sels inorganiques dans une quantité d'au moins 50 % en poids, par rapport au poids total de la couche de renforcement (20),
iii) éventuellement sécher la couche de découplage (30) et la couche de renforcement (20),
iv) appliquer une couche résistante au feu (40) sur la seconde surface majeure de la couche de découplage (30), dans laquelle la couche résistante au feu (40) contient un graphite gonflable (A) avec une granulométrie moyenne D50 < 150 µm en une quantité de 3 à 10 % en poids, et un graphite gonflable (B) avec une granulométrie moyenne D50 allant de 180 à 500 µm en une quantité de 20 à 50 % en poids, respectivement par rapport au poids total de la couche résistante au feu (40), et
v) éventuellement sécher la couche de découplage (30) et la couche résistante au feu (40).

10. Plaque d'isolation thermique à plusieurs couches pour l'isolation thermique de bâtiments, comprenant :
a) une couche majeure (10) en un matériau organique-polymère thermiquement isolant, présentant une première surface majeure et une seconde surface majeure opposée à ladite première surface majeure, et
b) une couche arrière (2) selon l'une ou plusieurs des revendications 1 à 8, dans laquelle la couche de renforcement (20) présente une première surface majeure et une seconde surface majeure opposée à ladite première surface majeure, et dans laquelle la couche de renforcement (20) est reliée à la couche majeure (10) le long la première surface majeure de la couche majeure (10) et le long la première surface majeure de la couche de renforcement (20), et dans laquelle la couche de découplage (30) est arrangée avec et reliée à la première surface majeure de la couche de découplage (30) sur la couche de renforcement (20).

11. Plaque d'isolation thermique à plusieurs couches selon la revendication 10,
**caractérisée en ce que** la couche majeure (10) comprend ou consiste en un matériau organique-polymère thermiquement isolant choisi dans le groupe consistant en polyuréthane, polyisocyanurate, polystyrène et résine phénolique, et des mélanges de ceux-ci.

12. Procédé pour produire une plaque d'isolation thermique à plusieurs couches pour l'isolation thermique de bâtiments,
**caractérisé en ce qu'**une couche arrière selon l'une ou plusieurs des revendications 1 à 8 est procurée, et une couche majeure (10) en un matériau organique-polymère thermiquement isolant est appliquée sur la première surface majeure de la couche de renforcement (20) et reliée à la couche de renforcement (20).

13. Plaque d'isolation thermique à plusieurs couches pour l'isolation thermique de bâtiments, comprenant une couche majeure (10) en un matériau organique-polymère thermiquement isolant, présentant une première surface majeure et une seconde surface majeure opposée à ladite première surface majeure,
- une première couche arrière sur la couche majeure (10), reliée à la couche majeure (10) le long la première surface majeure de la couche majeure,
- une seconde couche arrière sur la couche majeure (10), reliée à la couche majeure (10) le long la seconde surface majeure de la couche majeure, lesdites première et/ou seconde couches arrières étant une couche arrière selon l'une ou plusieurs des revendications 1 à 8.

14. Plaque d'isolation thermique à plusieurs couches pour l'isolation thermique de bâtiments selon la revendication 13, comprenant une couche majeure (10) en un matériau organique-polymère thermiquement isolant, présentant une première surface majeure et une seconde surface majeure opposée à ladite première surface majeure,
- une première couche arrière sur la couche majeure (10), reliée à la couche majeure (10) le long la première surface majeure de la couche majeure, et le long la première surface majeure de la couche de renforcement,
- une seconde couche arrière sur la couche majeure (10), reliée à la couche majeure (10) le long la seconde surface majeure de la couche majeure et le long la première surface majeure de la couche de renforcement, lesdites première et/ou seconde couches arrières étant une couche arrière selon l'une ou plusieurs des revendications 1 à 8.

15. Utilisation d'une plaque d'isolation thermique à plusieurs couches selon l'une des revendications 10 ou 11 pour l'isolation thermique de bâtiments, notamment pour l'isolation thermique pour façades ventilées.
